## Europäisches Patentamt
## European Patent Office
## Office européen des brevets

(19)

(11) Numéro de publication: **0 111 430**
**B1**

(12) **FASCICULE DE BREVET EUROPÉEN**

(45) Date de publication du fascicule du brevet:
**13.08.86**

(21) Numéro de dépôt: **83402260.0**

(22) Date de dépôt: **23.11.83**

(51) Int. Cl.⁴: **B 62 D  25/10,** B 60 K  11/08,
B 60 R  13/08

(54) Capot pour compartiment moteur de véhicule automobile.

(30) Priorité: **25.11.82 FR 8219801**

(43) Date de publication de la demande:
**20.06.84 Bulletin 84/25**

(45) Mention de la délivrance du brevet:
**13.08.86 Bulletin 86/33**

(84) Etats contractants désignés:
**DE GB IT**

(56) Documents cité:
**DE-A-2 235 729**
**FR-A-994 872**
**FR-A-2 490 572**
**GB-A-366 689**
**GB-A-2 073 116**
**US-A-3 616 871**
**US-A-3 897 850**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Chevreux, Gérard, 104 Chemin des Boeufs, F-95220 Herblay (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1986

## Description

L'invention se rapporte à un capot doublé d'un panneau insonorisant et destiné à fermer le compartiment moteur d'un véhicule automobile.

On sait qu'il est possible de réduire considérablement le niveau des bruits émis vers l'extérieur par le moteur d'un véhicule, en disposant sur la face interne du capot une doublure constituée par un panneau insonorisant placé dans son ensemble à une certaine distance du capot sur lequel il est fixé, notamment par collage, le long de bandes qui délimitent des corps creux entre le capot et sa doublure.

On sait d'autre part que, pour réduire la résistance de l'air à l'avancement d'un véhicule, c'est-à-dire son Cx, il faut limiter le plus possible les ouvertures par lesquelles l'air pénètre dans le compartiment moteur. Il est alors nécessaire d'utiliser au mieux le débit d'air pénétrant dans ce compartiment moteur en le canalisant vers les organes où il doit parvenir, par exemple un filtre placé sur l'admission d'air au moteur ou un échangeur de refroidissement.

L'invention vise a concilier de façon simple et économique les nécessités de l'insonorisation et celles d'une bonne distribution de l'air.

Elle se rapporte donc à un capot du type précité, avec lequel une doublure, constituée par un panneau insonorisant, délimite des corps creux. Ce capot est caractérisé en ce que l'un, au moins, des corps creux constitue un conduit d'amenée d'air comportant une ouverture d'entrée à proximité immédiate du bord avant du capot et au moins une ouverture de sortie dirigeant l'air en direction du compartiment-moteur.

De préférence, il présente une forme convergente de l'avant vers l'arrière.

Un exemple de réalisation de l'invention fait l'objet de la description qui suit, en référence aux dessins joints dans lesquels:

- la fig. 1 est une vue par dessous d'un capot selon l'invention;

- la fig. 2 est une coupe en élévation selon la ligne 2-2 de la figure 1.

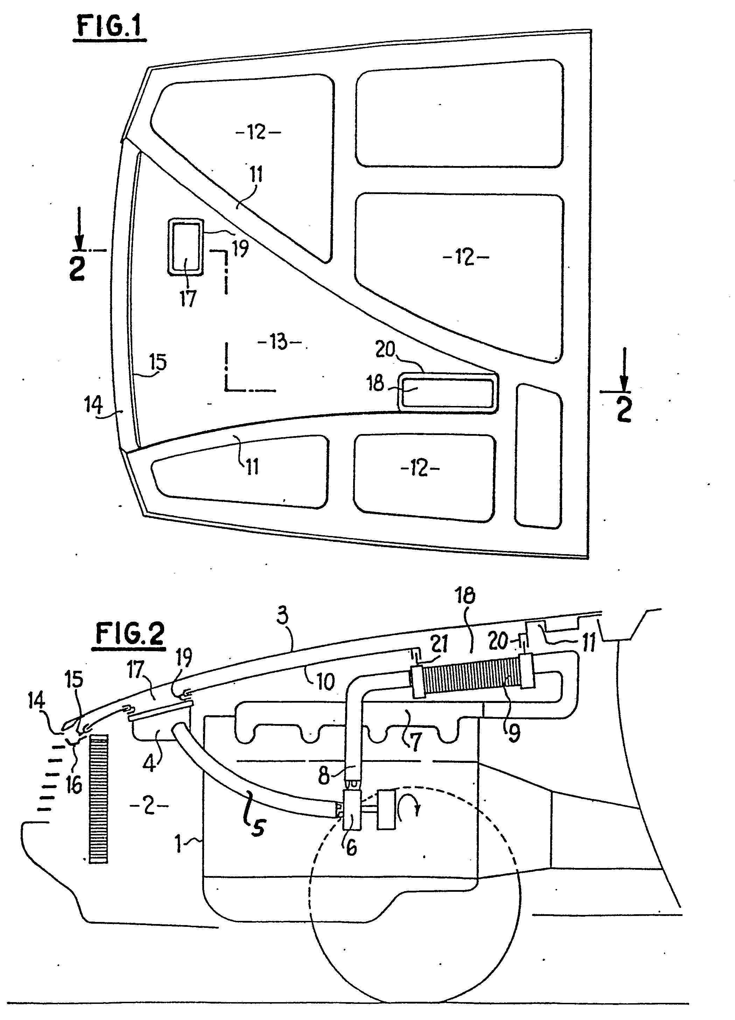

On voit, sur la figure 2, la partie avant d'un véhicule automobile, avec un moteur 1 disposé dans un compartiment 2 fermé, vers le haut, par un capot 3. Le dispositif d'admission du moteur comporte un filtre à air 4 relié par un conduit 5 à un turbo-compresseur 6. L'air comprimé par ce dernier est dirigé vers un collecteur d'admission 7 par un conduit 8 sur lequel est disposé un échangeur de chaleur air/air 9, destiné à refroidir l'air comprimé.

Le capot 3 comporte une doublure intérieure 10 constituée par un panneau autoportant préformé, par exemple à base de fibres agglomérées. Ce panneau est situé, dans son ensemble, à une certaine distance e du capot, cette distance pouvant être de 20 à 50 mm. Il présente des nervures 11 dirigées vers le capot 3 et permettant sa fixation sur ce dernier, notamment par collage.

Les nervures 11 délimitent entre le capot 3 et sa doublure 10 des corps creux 12, 13. Une telle disposition permet d'obtenir une bonne atténuation des bruits par une combinaison, variable selon la nature du matériau utilisé, entre l'effet d'absorption et l'effet de membrane.

Suivant l'invention, l'un, 13, des corps creux est utilisé comme conduit d'air. A cet effet, il comporte une ouverture transversale 14 située à proximité immédiate du bord avant du capot 3, sur une grande partie de la largeur de ce dernier. Avantageusement, le bord avant du panneau 10, le long de cette ouverture 14, est muni d'une lèvre souple 15 qui s'applique sur une traverse avant 16, lorsque le capot est en position de fermeture, comme représenté sur la figure 2. Cette disposition permet de bénéficier de la pression dynamique de l'air qui pénètre entre cette traverse et le capot.

La partie du panneau 10 délimitant le corps creux 13 utilisé comme conduit d'air comporte une ouverture 17 et une ouverture 18 destinées à venir se placer, respectivement, au-dessus du filtre à air 4 et de l'échangeur de chaleur 9, lors de la fermeture du capot.

Sur le pourtour de l'ouverture 17 est fixée une manchette souple 19 qui s'applique sur la périphérie du filtre à air 4 et évite les fuites d'air vers le compartiment du moteur.

L'ouverture 18 est bordée par un double cadre 20 formant chicane avec un cadre 21 fixé sur le pourtour de l'échangeur de chaleur 9, ce qui permet les débattements de ce dernier sans contact avec le panneau 10, tout en assurant le guidage optimal de l'air vers l'échangeur 9.

De préférence, comme on le voit sur la figure 1, le corps creux 13 formant conduit d'air est délimité latéralement par des nervures 11 convergentes et présente une largeur décroissante depuis l'avant jusqu'à sa partie arrière où se trouve l'échangeur de chaleur 9.

Grâce à cette disposition, on obtient une utilisation optimale du débit d'air ayant pénétré par l'ouverture 14, ce resultat étant obtenu de façon particulièrement économique par l'utilisation de la doublure d'insonorisation du capot.

## Revendications

1 - Capot pour compartiment moteur de véhicule automobile, comportant une doublure constituée par un panneau insonorisant (10), muni de nervures (11) délimitant des corps creux (12, 13) entre lui et le capot, caractérisé en ce que, au moins l'un (13) des corps creux constitue un conduit d'amenée d'air comportant une ouverture d'entrée (14) à proximité immédiate, du bord avant du capot, et au moins une ouverture de sortie (17, 18) dirigeant l'air en direction du compartiment-moteur.

2 - Capot suivant la revendication 1, caractérisé en ce que le long de l'ouverture d'entrée (14) du conduit d'air, le bord avant du panneau de doublure (10) porte une lèvre souple (15) qui, lors de la fermeture du capot, s'applique sur une traverse fixe (16).

3 - Capot suivant l'une des revendications 1 et 2, caractérisé en ce que la partie du panneau (10) délimitant le conduit d'air comporte une ouverture (17) de sortie vers le filtre à air (4) du moteur.

4 - Capot suivant l'une des revendications 1 et 2, caractérisé en ce que la partie du panneau (10) délimitant le conduit d'air comporte une ouverture (18) de sortie vers un échangeur de chaleur (9).

5 - Capot suivant l'une des revendications 1 à 4, caractérisé en ce que le corps creux (13) formant conduit d'air est délimité par deux nervures (11) qui convergent de l'avant à l'arrière du capot.

6 - Capot suivant l'une des revendications 1 à 5, caractérisé en ce qu'une manchette (19) souple est fixée au bord de l'ouverture de sortie (17).

7 - Capot suivant l'une des revendications 1 à 6, caractérisé en ce que l'ouverture de sortie (18) est bordée par un double cadre (20) de formation d'une chicane périphérique.

## Patentansprüche

1. Haube für den Motorraum eines Kraftfahrzeugs, mit einer Auskleidung, welche durch eine schalldämmende Platte (10) gebildet ist, die mit Rippen (11) versehen ist, welche Hohlkörper (12,13) zwischen ihr und der Haube bestimmen, dadurch gekennzeichnet, daß wenigstens einer (13) der Hohlkörper eine Luftzuführungsleitung bildet, welche eine Eintrittsöffnung (14) in unmittelbarer Nähe des Vorderrandes der Haube und wenigstens eine Austrittsöffnung (17, 18), welche die Luft in Richtung auf den Motorraum lenkt, aufweist.

2. Haube nach Anspruch 1, dadurch gekennzeichnet, daß längs der Eintrittsöffnung (14) der Luftleitung der vordere Rand der Auskleidung (10) eine biegsame Lippe (15) trägt, welche sich beim Schließen der Haube auf eine feststehende Traverse (16) legt.

3. Haube nach einem der Ansprüche 1 und 2, dadurch gekennzeichnet, daß der die Luftleitung bestimmende Teil der Platte (10) eine Austrittsöffnung (17) zum Luftfilter (4) des Motors hin aufweist.

4. Haube nach einem der Ansprüche 1 und 2, dadurch gekennzeichnet, daß der die Luftleitung bestimmende Teil der Platte (10) eine Austrittsöffnung (18) zum Wärmetauscher (9) hin aufweist.

5. Haube nach einem der Ansprüche 1 bis 4, dadurch gekennzeichnet, daß der die Luftleitung bildende Hohlkörper (13) durch zwei Rippen (11) begrenzt ist, welche vom vorderen zum hinteren Teil der Haube hin zusammenlaufen.

6. Haube nach einem der Ansprüche 1 bis 5, dadurch gekennzeichnet, daß eine biegsame Manschette (19) am Rand der Austrittsöffnung (17) befestigt ist.

7. Haube nach einem der Ansprüche 1 bis 6, dadurch gekennzeichnet, daß die Austrittsöffnung (18) durch eine Doppeleinfassung (20) zur Bildung einer Umfangsschikane eingefaßt ist.

## Claims

1. A bonnet for an engine compartment of a motor vehicle, comprising a lining constituted by a sound-insulating panel (10) provided with ribs (11) defining hollow bodies (12, 13) therebetween and the bonnet, characterised in that at least one (13) of the hollow bodies constitutes an air supply conduit having an inlet opening (14) in the immediate vicinity of the front edge of the bonnet, and at least one outlet opening (17, 18) directing the air toward the engine compartment.

2. A bonnet according to claim 1, characterised in that the front edge of the lining panel (10) carries, along the inlet opening (14) of the air conduit, a flexible lip portion (15) which, when the bonnet is closed, is applied against a fixed crossmember (16).

3, A bonnet according to one of the claims 1 and 2, characterised in that the part of the panel (10) defining the air conduit comprises an outlet opening (17) adjacent to the air filter (4) of the engine.

4. A bonnet according to one of the claims 1 and 2, characterised in that the part of the panel (10) defining the air conduit comprises an outlet opening (18) adjacent to a heat exchanger (9).

5. A bonnet according to one of the claims 1 to 4, characterised in that the hollow body (13) forming the air conduit is defined by two ribs (11) which converge from the front to the rear of the bonnet.

6. A bonnet according to one of the claims 1 to 5, characterised in that a flexible sleeve (19) is fixed to the edge of the outlet opening (17).

7. A bonnet according to one of the claims 1 to 6, characterised in that the outlet opening (18) is bordered by a double frame (20) forming a peripheral baffle.

## FIG.1

-12-

11

19

17

-13-

15

20

18

14

11

-12-

-12-

## FIG.2

18

3

21

20

11

19

10

17

15

14

9

7

16

4

8

-2-

5

1

6